# FASCICULE DE BREVET EUROPEEN

(11) **EP 3 718 871 B1**
(45) Date de publication et mention de la délivrance du brevet: **09.07.2025**
(21) Numéro de dépôt: 20166024.8
(22) Date de dépôt: 26.03.2020
(51) Int. Cl.: B62J 17/083, B62J 17/08

(54) **PROTECTION INDIVIDUELLE CONTRE LES INTEMPERIES**
INDIVIDUELLER SCHUTZ GEGEN UNWETTER
INDIVIDUAL PROTECTION AGAINST BAD WEATHER

(30) Priorité: 05.04.2019 FR 1903681
(43) Date de publication de la demande: 07.10.2020
(73) Titulaire: RAINJOY, 74290 Veyrier-du-Lac (FR)
(72) Inventeur: FRANDEBOEUF, Eric, 74290 Veyrier-du-Lac (FR); METTAVANT, Benjamin, 84980 Le Lavandou (FR)
(74) Mandataire: Ipsilon Lyon

(56) Documents cités:
- WO-A1-03/091088
- WO-A1-2014/191313
- CN-A- 108 720 199
- DE-U1- 20 310 227
- ES-U- 1 160 383
- IT-A1- TO20 080 798
- JP-A- 2017 036 022

## Description

La présente invention concerne une protection individuelle contre les intempéries, destinée à être portée par l'utilisateur et fixée au moyen de direction d'un engin mobile.

Dès l'invention de la bicyclette dans la deuxième moitié du 19ème siècle, des systèmes de protection contre les intempéries spécifiques à ces engins mobiles ont été développés, par exemple des fixations de parapluie au cadre du vélocipède, qui apportaient une protection contre la pluie toute relative.

Des structures plus imposantes, sous des formes de coques de protection, rigides et forcément lourdes avec les moyens de l'époque amélioraient cette protection recherchée contre les intempéries, telles que divulguées par les documents FR 867 497 et FR 876 786, mais il semble que la diffusion de ce type de protection n'a été qu'anecdotique.

Récemment, des structures disponibles dans le commerce, plus légères, basées sur une bulle de protection, ont vu le jour, répondant à des problématiques de légèreté, de coût et de relative facilité d'installation selon les modèles proposés.

Ces structures se présentent par une toile munie d'armatures, reliées à l'avant et à l'arrière d'un vélo. Ces structures sont assemblées au vélo par des systèmes de fixation qui doivent être préinstallés et qui restent en place, une fois la toile et les armatures retirées.

Ces structures sont en général destinées à un vélo personnel et ne permettent ainsi pas, ou en tout cas pas de manière aisée, d'être installées sur des vélos de location ou en libre-service.

En outre, ces structures bien qu'efficaces, restent disponibles à un coût relativement élevé, ce qui semble limiter leur impact sur le plus grand nombre.

Le document de l'art antérieur IT TO20 080 798 A1 divulgue les caractéristiques du préambule de la revendication 1.

La présente invention propose un dispositif de protection individuelle, permettant de pallier les inconvénients précités.

L'invention se rapporte ainsi à un dispositif de protection individuelle contre les intempéries destiné à la protection d'un utilisateur utilisant un engin roulant, le dispositif comprenant une paroi de protection, constituée d'une paroi souple qui s'étend depuis le système de portage pour se positionner au-dessus de la tête de l'utilisateur jusque vers l'avant tandis que des moyens de fixation sont prévus pour fixer l'extrémité libre avant de la paroi de protection à l'organe de direction de l'engin roulant et comprenant une armature constituée par au moins une tige flexible déformable élastiquement ou bien d'au moins un arceau tendeur afin de replier le dispositif en position de non utilisation caractérisé en ce que le dispositif est porte sur le dos de l'utilisateur par un système de portage du type d'une paroi dorsale d'un sac a dos, muni de bretelles de portage, et en ce que la paroi souple comporte une jupe arrière protégeant le bas du dos et le bassin de l'utilisateur et formant une housse accueillant l'armature et la paroi souple à l'état replié.

Le dispositif de protection ainsi obtenu est léger, aisément transporté et installé, et s'adapte de façon dynamique à la position de l'utilisateur lors de ses déplacements.

Le dispositif selon l'invention peut en outre présenter une ou plusieurs des caractéristiques suivantes.

Le dispositif est alors repliable en une configuration plus compacte pour son transport.

L'armature peut être constituée par deux tiges flexibles latérales déformables élastiquement.

Les bordures latérales de la paroi de protection peuvent être fixées à l'armature.

La rigidité du dispositif est alors améliorée à l'état déployé.

La paroi souple peut être maintenue par l'armature sur toute sa périphérie.

En alternative, l'armature comporte une pluralité d'arceaux tendeurs imbriqués en matériau souple élastique précontraints formant, à l'état déployé une armature semi-rigide, et le dispositif comporte alors des jupes latérales qui délimitent la courbure du dispositif en limitant la détente des arceaux tendeurs.

Le dispositif ainsi obtenu se replie par torsion des arceaux en forme de huit, et se déploie spontanément sous l'action desdits arceaux.

Un des arceaux tendeurs peut former un cadre pour une portion tendue à l'état déployé de la paroi souple du dispositif.

La rigidité du dispositif est alors améliorée à l'état déployé.

Un des arceaux tendeurs peut former un cadre pour une portion avant transparente de paroi souple de sorte à former un pare-brise transparent.

L'assemblage du dispositif est alors simplifié.

Les arceaux tendeurs peuvent être tangents ou en contact autour de l'extrémité avant du dispositif, au niveau des moyens de fixation au moyen de direction.

La rigidité de la partie avant est alors améliorée, et le repliage du dispositif est simplifié.

La paroi souple peut comprendre une traverse.

Le système de portage peut comporter une paroi dorsale.

L'armature peut être réalisée en fibre de verre.

La paroi souple peut comporter une jupe arrière protégeant le bas du dos et le bassin de l'utilisateur.

La jupe arrière peut former au moins une partie d'une housse accueillant l'armature et la paroi souple à l'état replié.

D'autres caractéristiques et avantages de l'invention se dégageront de la description qui va suivre en regard des dessins annexés qui ne sont donnés qu'à titre d'exemples non limitatifs.

Les moyens de fixation comportent l'un au moins des suivants : une sangle élastique, une bande auto-agrippante à boucles et crochets textiles, une attache réversible à coopération de forme, une boucle de serrage, des crochets coopérant avec le moyen de direction par coopération de forme.

La fixation du dispositif à l'engin roulant est alors rapide, aisément réversible, et ne nécessite pas d'outils.

La figure 1 est une vue en perspective, en cours d'utilisation, du dispositif de protection individuelle, selon un mode de réalisation.

La figure 2 est une vue de face et déployée à plat du dispositif de protection individuelle.

La figure 3 est une vue de face du dispositif de protection individuelle, selon un mode d'exécution,

La figure 4 est une vue de trois-quarts avant d'un dispositif selon une variante revendiquée à la revendication 1 et constituant un mode de réalisation de l'invention,

La figure 5 est une vue de trois-quarts arrière de la variante de la figure 4 en cours d'utilisation, avec un engin mobile et un utilisateur.

La figure 6 illustre schématiquement le repliage du dispositif selon la variante des figures 4 et 5.

Ainsi, le dispositif (1) de protection individuelle contre les intempéries selon l'invention, comprend une paroi souple (2), une armature (3), un système de portage (4) et un moyen de fixation (5) à l'organe de direction (MD) d'un engin mobile (EM).

Il est entendu par organe de direction, des poignées, un guidon ou une potence.

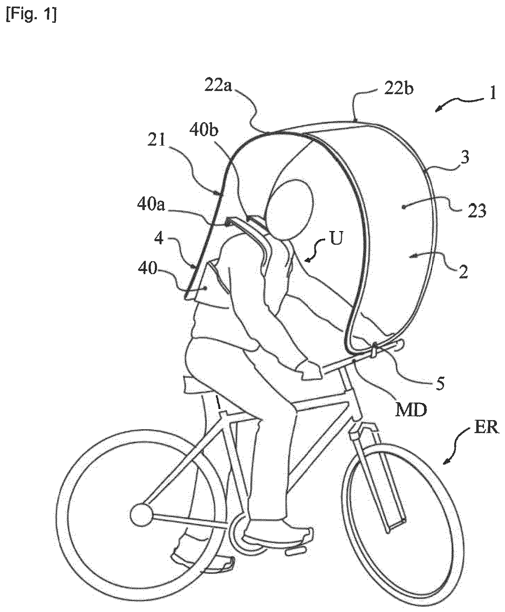

Ajoutons que tel qu'illustré à la figure 1, la paroi souple (2) constitue la paroi de protection pour l'utilisateur (U). Cette dernière est constituée par une couche d'un matériau souple et déformable et s'étend depuis le système de portage (4) pour se positionner au-dessus de la tête de l'utilisateur et à s'étendre vers l'avant en direction du moyen de direction de l'engin mobile, à laquelle l'extrémité libre du dispositif est destinée à être fixée.

Le dispositif (1) de l'invention est porté sur le dos de l'utilisateur (U) pour être fixé en position de protection à un engin mobile, tel qu'un cycle, une trottinette ou une poussette.

La paroi souple (2) de protection est portée par l'utilisateur et lui est donc solidaire et suit ses mouvements, son orientation est optimisée selon la pratique de l'utilisateur.

Ainsi, le dispositif (1) selon l'invention, suit les mouvements de l'utilisateur, notamment à vélo, tant dans une position assise sur la selle, que debout sur les pédales dans laquelle la paroi souple (2) se tend vers le haut, que penché en avant dans laquelle la paroi souple (2) se fléchit vers l'avant.

Notons que la paroi souple (2) a un profil longitudinal, d'axe longitudinal (X, X') de symétrie, ayant une longueur supérieure à sa largeur.

La paroi souple (2) comprend une partie arrière (21) destinée à être assemblée au système de portage (4), une partie avant (23) comprenant le moyen de fixation (5) destiné à se fixer à l'engin mobile, ainsi que des bordures latérales (22a, 22b), à savoir une bordure latérale droite (22a) et une bordure latérale gauche (22b).

On notera que la paroi souple est au moins en partie en matériau transparent, tel que par exemple en PVC (Polychlorure de vinyle).

Le système de portage (4) est du type d'une paroi dorsale d'un sac à dos, muni de bretelles de portage tel qu'illustré.

Ajoutons que la longueur de la paroi souple (2) selon l'axe longitudinal (X, X') est supérieure à 150 centimètres, de préférence supérieure à 180 centimètres.

Selon un mode de réalisation, la longueur de la paroi souple (2) est comprise entre 180 et 220 centimètres.

Notons que la partie la plus large de la paroi souple (2) est comprise entre 60 et 80 centimètres.

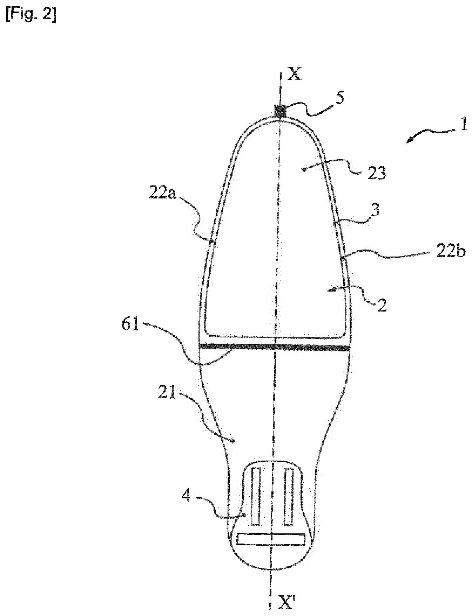

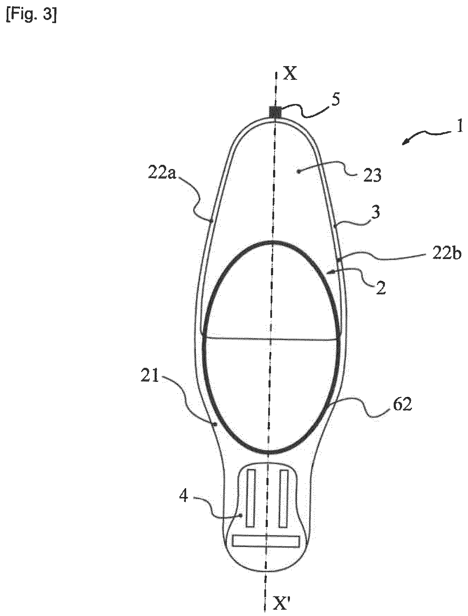

Précisons que selon le mode de réalisation illustré notamment aux figures 2 et 3, la paroi souple a une forme d'ogive, à savoir que la partie la plus large est localisée à environ 50 %de sa longueur selon l'axe longitudinal (X, X') destinée à venir se positionner à l'aplomb de l'utilisateur, et se rétrécit en direction de la partie avant (23) et en direction de la partie arrière.

Précisons que selon une caractéristique supplémentaire, la largeur du premier quart de la paroi souple (2), au niveau du système de portage (4), correspondant à une portion de la partie arrière (21) de la paroi flexible (2), est comprise entre 30 et 50 centimètres.

La caractéristique précédente, permet d'apporter de l'aérodynamisme au dispositif (1), ne gênant pas la progression de l'utilisateur et réduisant la prise au vent.

Selon un mode de réalisation, la paroi souple (2) s'étend du système de portage (4) et se prolonge vers l'avant.

Selon le mode de réalisation précédent, la paroi souple (2) est destinée à recouvrir le dos de l'utilisateur.

Selon un autre mode de réalisation, la paroi souple (2) s'étend de part et d'autre du système de portage (4) selon l'axe longitudinal (X, X').

Selon le mode de réalisation précédent, la paroi souple (2) est destinée à recouvrir le dos de l'utilisateur et se prolonger vers l'arrière pour prévenir l'utilisateur contre les projections provenant du train arrière de l'engin mobile.

Selon le mode de réalisation illustré, l'extrémité proximale de la partie arrière (21) de la paroi souple (2) coïncide sensiblement avec l'extrémité inférieure du système de portage (4).

Selon une caractéristique, au moins un tiers de la longueur de la paroi souple (2) est transparente. Des portions souples de moins d'un tiers peuvent suffire pour former une visière.

Selon la caractéristique précédente, au moins la partie avant (23) de la paroi souple (2) est transparente, afin d'assurer la visibilité avant de l'utilisateur

Selon un mode de réalisation, au moins cinquante pourcents de la longueur de la paroi souple (2) est transparente.

Afin que la paroi souple (2) puisse conserver une certaine forme lors de son utilisation, la paroi souple (2) est assemblée à au moins une armature (3).

Notons que les bordures latérales (22a, 22b) de la paroi souple (2) sont fixées à une armature (3).

Selon le mode de réalisation l'armature (3) est constituée par deux tiges flexibles latérales, déformables élastiquement, s'étendant de l'extrémité de la partie arrière (21) à l'extrémité de la partie avant (23).

Selon le mode de réalisation illustré, la paroi souple (2) est maintenue sur toute sa périphérie par une armature (3), grâce, à deux tiges latérales qui en position d'utilisation et de protection sont recourbées en regard l'une de l'autre de telle manière à ce que leurs extrémités respectives soient raccordées.

Selon une variante d'exécution, l'armature (3) est en forme de U et s'étend de l'extrémité arrière de la bordure latérale droite (22a), s'étend en direction de la partie avant (23) et se prolonge en direction de l'extrémité arrière de la paroi latérale gauche (22b).

Rappelons que les tiges formant l'armature sont en matériau déformable élastiquement, et sont par exemple réalisées en fibre de verre.

Selon la caractéristique précédente, la tige a un diamètre compris entre 2 et 8 millimètres, de préférence compris entre 4 et 6 millimètres.

La paroi souple (2) est ainsi maintenue par l'armature (3) à ses extrémités latérales dans une position courbée, la paroi souple (2) peut avoir tendance à s'affaisser en direction de la tête de l'utilisateur, le long de l'axe longitudinal (X, X').

Ainsi, le dispositif (1) comprend un moyen d'étarquer (61, 62) la paroi souple (2).

Selon le mode de réalisation illustré à la figure 2, le moyen d'étarquer est une traverse (61) agencée perpendiculairement à l'axe longitudinal (X, X').

Selon le mode de réalisation précédent, la traverse (61) s'étend sur la largeur de la paroi flexible (2) et relie, de part et d'autre l'armature (3).

Notons que la traverse (61) est réalisée en un matériau flexible déformable élastiquement.

Précisons par ailleurs que la traverse (61) pourrait être réalisée en deux brins de courte longueur connectés ensemble en position d'utilisation, de façon à ce que la déconnexion des brins permette leur rangement dans le système de portage.

Selon une caractéristique, la traverse (61) est destinée à venir se positionner à l'aplomb de l'utilisateur, et permet une meilleure retenue de la paroi souple en position d'utilisation.

Selon la caractéristique précédente, la traverse (61) est localisée entre le quart et la moitié de la longueur de la paroi souple (2), au niveau de la partie arrière (21), préférentiellement entre le tiers et la moitié de la longueur de la paroi souple (2).

Selon le mode d'exécution illustré à la figure 3, le moyen d'étarquer la paroi flexible (2) est un arceau (62).

Selon le mode d'exécution précédent, l'arceau (62) s'étend de l'extrémité inférieure de la partie arrière (21) de la paroi souple (2) vers l'avant, en direction du moyen de fixation (5).

Selon le mode de réalisation des figures 1 à 3, l'extrémité distale de l'arceau (62), selon l'axe longitudinal (X, X') s'étend jusqu'à environ un tiers de la longueur de la paroi souple (2).

Selon le mode de réalisation illustré, le système de portage (4) est un harnais, comme par exemple du type d'une paroi dorsale d'un sac à dos, muni de bretelles de portage (40a, 40b) tel qu'illustré, et éventuellement maintenu en outre par une sangle ventrale (40) supplémentaire.

Selon une variante d'exécution, le harnais est intégré à un sac à dos.

Précisons que le sac à dos comprend avantageusement un compartiment dans lequel la paroi souple (2) après est destinée à venir se loger lorsque le dispositif (1) est replié en position de non utilisation. On précisera que grâce à la souplesse des éléments constituant la protection individuelle il est possible de replier tout le dispositif sur lui-même.

Selon un perfectionnement, le système de portage (4) est amovible comme par exemple avec un système de déconnexion auto-déclenchable visant à désolidariser les bretelles du dos du système de portage.

Ainsi, en cas de fortes bourrasques qui pourraient déstabiliser l'utilisateur en circulation sur la route, la désolidarisation de la paroi souple, du système de portage (4). Des accidents potentiels peuvent ainsi être évités (déport sur une voie de circulation de voitures par exemple).

Selon un autre mode d'exécution, le système de portage (4) étant localisé au niveau de la face destinée à faire face à l'utilisateur, le dispositif (1) comprend un moyen de rangement de la paroi souple (2), localisé sur la face opposée à celle équipée du système de portage (4).

Selon une variante le système de portage (4) pourrait également avoir des poches ou compartiment de rangement pour divers vêtements ou objets

Selon le mode d'exécution précédent, le moyen de rangement est soit une paroi élastique comprenant un orifice, soit deux parois élastiques délimitant une ouverture, avantageusement destinées à être associées par un moyen de fermeture. Une fois la paroi souple (2) repliée, cette dernière est destinée à être retenue pliée par la/les paroi(s) élastique(s).

Selon une caractéristique complémentaire, le moyen de fixation (5) est une sangle élastique ou une bande auto-agrippante à boucles et crochets textiles par exemple, une attache réversible à coopération de forme (« clips »), une boucle de serrage, des crochets coopérant avec le moyen de direction (MD) par coopération de forme etc.

Selon le mode de réalisation illustré, les extrémités latérales libres de la partie avant (23) comprennent chacune un moyen de fixation (5).

La caractéristique précédente permet une connexion au moyen de direction (MD) de l'engin mobile la plus simple possible en un temps très court. Cette caractéristique permet une installation sur tout engin mobile, trottinette ou poussette, sans avoir à installer au préalable une structure de connexion à un engin mobile spécifique.

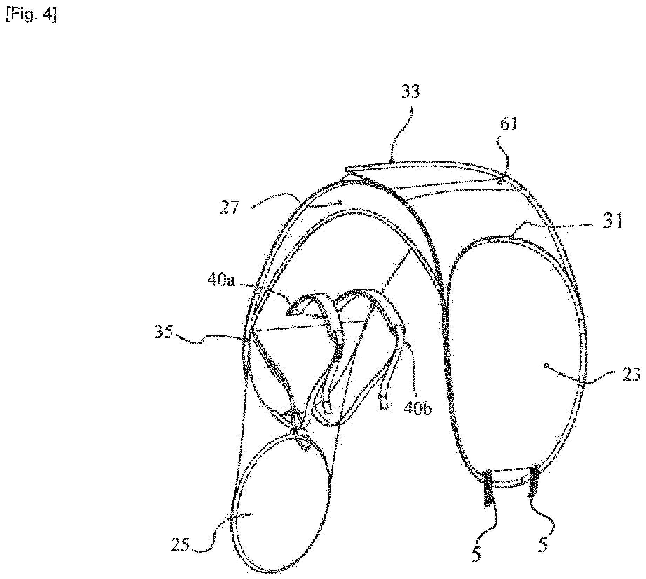

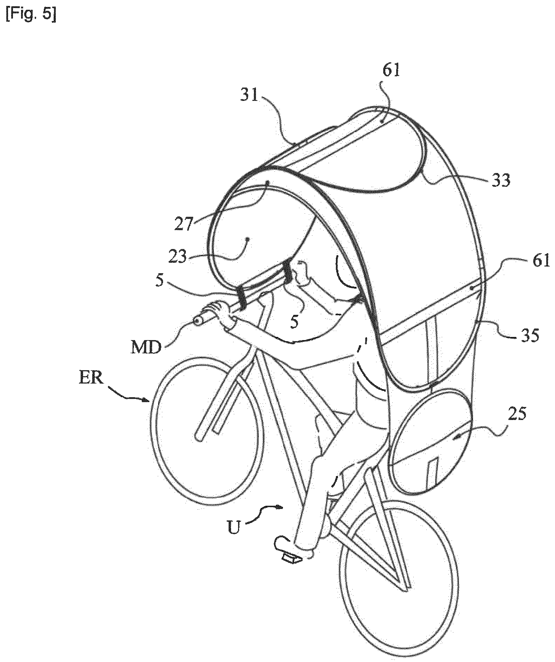

Les figures 4 et 5 sont des représentations de trois quart respectivement de devant et de derrière d'un mode de réalisation particulier de dispositif (1) de protection individuelle qui est revendiqué à la revendication 1.

En figure 4, le dispositif est représenté seul, à l'état déployé, prêt à être installé sur un engin mobile.

En figure 5, le dispositif est en cours d'utilisation, et un utilisateur (U) portant le dispositif (1) ainsi qu'un engin mobile relié audit dispositif (1) sont schématiquement représentés.

L'armature (3) du dispositif (1) de protection individuelle des figures 4 et 5 comporte une pluralité d'arceaux tendeurs (31, 33, 35) en matériau souple élastique et précontraints, ici en particulier au nombre de trois, de forme ovale, elliptique ou oblongue.

Ces arceaux tendeurs (31, 33, 35) sont imbriqués et coplanaires avec la paroi souple, de sorte à former une armature semi-rigide à l'état déployé du dispositif (1).

Les arceaux tendeurs (31, 33, 35) sont en outre tangents ou en contact autour de l'extrémité avant du dispositif (1), au niveau des moyens de fixation (5) au moyen de direction (MD). Les arceaux tendeurs (31, 33, 35) du dispositif des figures 4 et 5 sont en particulier parallèles et assez proches pour pouvoir être intégrés dans un seul ourlet ou un seul repli de la paroi souple (2) sur une partie de sa portion avant (21) sur plusieurs dizaines de centimètres au niveau de l'extrémité avant.

Les trois arceaux tendeurs (31, 33, 35) peuvent selon un mode de réalisation particulier être des boucles d'une seule tige repliée sur elle-même, ou être composées de demi-tiges imbriquées.

Ainsi le dispositif (1) selon l'invention peut être utilisé sur tout engin mobile, de location ou en libre-service, par simple liaison du moyen de fixation (5) à son moyen de direction (MD).

Le plus grand (35) des arceaux tendeurs (31, 33, 35), forme un cadre pour une portion importante du dispositif (1) et en particulier pour toute la portion tendue et donc semi-rigide du dispositif (1) à l'état déployé.

Le plus petit des arceaux tendeurs (31) forme un cadre ovale ou oblong pour la portion avant (23) transparente de la paroi souple (2), de sorte à former un pare-brise permettant de conserver la visibilité vers l'avant pour l'utilisateur (U) tout en assurant sa protection contre les intempéries, encadré par ledit plus petit des arceaux tendeurs (31). La portion avant (23) transparente de paroi souple (2) peut notamment être ourlée ou plus généralement fixée autour du plus petit des arceaux (31) pour un assemblage simplifié du dispositif (1).

L'arceau intermédiaire (33) forme un élément structurel rigidifiant supplémentaire, permettant d'étarquer la paroi souple afin d'assurer une forme courbée au-dessus de la tête de l'utilisateur (U).

Le dispositif (1) comporte en outre deux jupes latérales (27) fixées latéralement le long des bords longitudinaux de part et d'autre de la paroi souple (2). Les jupes latérales (27) peuvent être par exemple cousues, collées, soudées ou venant de matière, avec la paroi souple (2). Ces jupes latérales (27) sont en particulier en forme de croissant. Les jupes latérales (27) sont réalisées en matériau inextensible et sont tendues à l'état déplié du dispositif (1). Les jupes latérales (27) délimitent ainsi la courbure du dispositif (1) en limitant la détente des arceaux tendeurs (31, 33, 35) précontraints, et contribuent ainsi à la rigidité du dispositif (1). Des jupes latérales (27, 29) de forme différente, de surfaces plus importantes, et/ou formant une fermeture latérale partielle sont aussi envisageables.

La portion arrière (23) de la paroi souple (2) se prolonge en une jupe arrière (25) au-delà du plus grand des arceaux (35). La jupe arrière (25) protège le bas du dos et le bassin de l'utilisateur (U), notamment de l'eau provenant du sol, par exemple soulevée par la roue arrière. La jupe arrière (25) forme dans le mode de réalisation des figures 4 et 5 au moins une partie d'une housse protectrice, sensiblement circulaire, dans laquelle le dispositif (1) peut être disposé à l'état replié.

La jupe arrière (25) peut en outre être rembourrée et former une assise posée sur la selle sur laquelle l'utilisateur (U) vient s'asseoir pour éviter le contact avec la selle mouillée de l'engin mobile.

Contrairement aux produits disponibles sur le marché, le dispositif (1) selon l'invention ne nécessite pas d'installation initiale de fixations à l'engin mobile, qui sont assemblées à des fixations complémentaires localisées sur une bulle de protection.

Ainsi le dispositif (1) selon l'invention peut être utilisé sur tout engin mobile, de location ou en libre-service, par simple liaison du moyen de fixation (5) à son moyen de direction (MD).

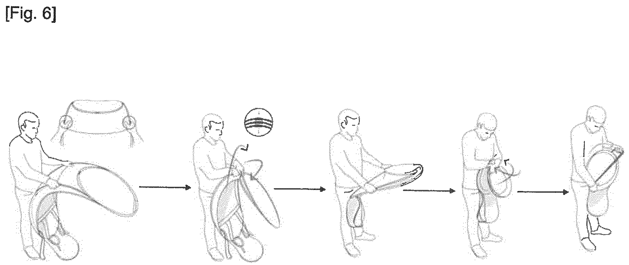

Le repli du dispositif (1) du mode de réalisation des figures 4 et 5 est en particulier effectué par torsion autour de l'axe longitudinal (X, X') puis repli des arceaux tendeurs (31, 33, 35) tordus en forme de huit sur eux-mêmes. Ce mode de repli est notamment semblable au repli de tentes à déploiement rapide et de pare-soleils à cadre souple précontraint. Différentes étapes du repli sont sommairement illustrées en figure 6.

La paroi souple (2) et les arceaux tendeurs (31, 33, 35) ainsi repliés sont alors insérés dans la housse protectrice, qui est avantageusement une portion de la jupe arrière (25), housse qui maintient alors les arceaux tendeurs (31, 33, 35) à l'état replié. La housse protectrice peut en particulier être séparée du reste du dispositif (1). Le dispositif est ainsi tout-en-un.

Pour le déploiement, la paroi souple (2) et les arceaux tendeurs (31, 33, 35), à l'état replié, sont sortis de la housse protectrice. Ainsi libérés, les arceaux tendeurs (31, 33, 35) précontraints se détendent et déploient spontanément le dispositif (1) en tendant la paroi souple (2).

A l'état replié, le dispositif est aisément transportable, notamment en formant un sac à dos avec les bretelles (40a, 40b), ou en tant que tel sous forme de sac de transport, attaché au moyen de boucles ou attaches supplémentaires (par exemple au moyen d'une attache au porte-bagage d'un vélo).

Pour une sécurité améliorée, un mode de réalisation particulier prévoit une fixation à libération réversible des bretelles (40a, 40b) lorsqu'une force supérieure à une valeur limite leur est appliquée. Les bretelles (40a, 40b) peuvent par exemple comporter des boucles de libération à coopération de forme (clips) dont une moitié est reliée à une portion de bretelle par des bandes à boucles et crochets textiles. Les boucles des bretelles peuvent alors être changées simplement.

Ainsi, en cas d'accident ou si le dispositif s'accroche à un obstacle, les bretelles (40a, 40b) se libèrent de façon réversible de sorte à éviter un accident ou suraccident sans rendre le dispositif (1) inutilisable ultérieurement.

Contrairement à une structure solidaire de la partie arrière et de la partie avant d'un engin mobile, le dispositif (1) selon l'invention, permet une descente et une montée facilitées sur l'engin mobile. En effet, selon les types d'engin mobile, l'utilisateur passe une de ses jambes au-dessus de la roue arrière afin de pouvoir s'asseoir sur la selle, ce qui semble difficile en présence d'une structure reliée à la partie arrière d'un vélo.

Notons également que le dispositif (1) selon l'invention étant porté par l'utilisateur et désolidarisé de l'engin mobile, lorsqu'il n'est pas utilisé, les risques de dégradation et de vol en comparaison d'une structure fixe sont limités voire nuls.

## Revendications

1. Dispositif de protection individuelle (1) contre les intempéries destiné à la protection d'un utilisateur (U) utilisant un engin roulant (ER), le dispositif (1) comprenant une paroi de protection (2), constituée d'une paroi souple (2) qui s'étend depuis un système de portage pour se positionner au-dessus de la tête de l'utilisateur jusque vers l'avant tandis que des moyens de fixation (5) sont prévus pour fixer l'extrémité libre avant de la paroi de protection à l'organe de direction (MD) de l'engin roulant (ER) et comprenant une armature (3) constituée par au moins une tige flexible déformable élastiquement (22a, 22b) ou bien d'au moins un arceau tendeur (31, 33, 35) afin de replier le dispositif en position de non utilisation, ledit dispositif (1) étant porté sur le dos de l'utilisateur par le système de portage (4), **caractérisé en ce que** le système de portage (4) est du type d'une paroi dorsale d'un sac à dos, muni de bretelles (40a, 40b) de portage, et **en ce que** la paroi souple (2) comporte une jupe arrière (25) protégeant le bas du dos et le bassin de l'utilisateur (U) et formant une housse accueillant l'armature (3) et la paroi souple (2) à l'état replié.

2. Dispositif de protection (1) selon la revendication précédente, dans laquelle l'armature (3) est constituée par au moins une tige flexible déformable élastiquement (22a, 22b), **caractérisé en ce que** l'armature (3) est constituée par deux tiges flexibles latérales déformables élastiquement.

3. Dispositif de protection (1) selon l'une quelconque des revendications précédentes, **caractérisé en ce que** les bordures latérales de la paroi de protection (2) sont fixées à l'armature (3).

4. Dispositif de protection (1) selon la revendication précédente, **caractérisé en ce que** la paroi souple (2) est maintenue par l'armature (3) sur toute sa périphérie.

5. Dispositif de protection (1) selon la revendication 1, dans laquelle l'armature (3) est constituée par au moins d'un arceau tendeur (31, 33, 35), **caractérisé en ce que** l'armature (3) comporte une pluralité d'arceaux tendeurs (31, 33, 35) imbriqués en matériau souple élastique précontraints formant une armature semi-rigide, et **en ce qu'**il comporte des jupes latérales (27) qui délimitent la courbure du dispositif (1) en limitant la détente des arceaux tendeurs (31, 33, 35).

6. Dispositif de protection (1) selon la revendication précédente, **caractérisé en ce qu'**un des arceaux tendeurs (35) forme un cadre pour une portion tendue à l'état déployé de la paroi souple (2) du dispositif (1).

7. Dispositif selon l'une des revendications 5 ou 6, **caractérisé en ce qu'**un des arceaux tendeurs (31) forme un cadre pour une portion avant (23) transparente de paroi souple (2) de sorte à former un pare-brise transparent.

8. Dispositif selon l'une des revendications 5 à 7, **caractérisé en ce que** les arceaux tendeurs (31, 33, 35) sont tangents ou en contact autour de l'extrémité avant du dispositif (1), au niveau des moyens de fixation (5) au moyen de direction (MD).

9. Dispositif de protection (1) selon l'une quelconque des revendications précédentes, **caractérisé en ce que** la paroi souple (2) comprend une traverse (61).

10. Dispositif de protection (1) selon l'une quelconque des revendications précédentes, **caractérisé en ce que** l'armature est réalisée en fibre de verre.

11. Dispositif selon l'une des revendications précédentes, **caractérisé en ce que** les moyens de fixation comportent l'un au moins des suivants : une sangle élastique, une bande auto-agrippante à boucles et crochets textiles, une attache réversible à coopération de forme, une boucle de serrage, des crochets coopérant avec le moyen de direction (MD) par coopération de forme.

## Patentansprüche

1. Persönliche Wetterschutzvorrichtung (1) zum Schutz eines Benutzers (U), der ein fahrbares Gerät (ER) benutzt, wobei die Vorrichtung (1) eine Schutzwand (2) umfasst, die aus einer flexiblen Wand (2) besteht, die von einem Tragesystem ausgehend über den Kopf des Benutzers bis nach vorne positioniert werden kann, während Befestigungsmittel (5) vorgesehen sind, um das vordere freie Ende der Schutzwand am Lenkorgan (MD) des fahrbaren Geräts (ER) zu befestigen, und eine Verstärkung (3) umfasst, die aus mindestens einer elastisch verformbaren flexiblen Stange (22a, 22b) oder aus mindestens einem Spannbügel (31, 33, 35) besteht, um die Vorrichtung in Nichtgebrauchsstellung zu klappen, wobei die Vorrichtung (1) vom Tragesystem (4) auf dem Rücken des Benutzers getragen wird, **dadurch gekennzeichnet, dass** es sich bei dem Tragesystem (4) um eine Art Rückenwand oder einen Rucksack handelt, der mit Tragegurten (40a, 40b) versehen ist, und dass die flexible Wand (2) eine hintere Schürze (25) aufweist, die den unteren Rücken und das Becken des Benutzers (U) schützt und eine Hülle bildet, die die Verstärkung (3) und die flexible Wand (2) im zusammengeklappten Zustand aufnimmt.

2. Schutzvorrichtung (1) nach dem vorstehenden Anspruch, bei der die Verstärkung (3) aus mindestens einer elastisch verformbaren seitlichen flexiblen Stange (22a, 22b) besteht, **dadurch gekennzeichnet, dass** die Verstärkung (3) aus zwei elastisch verformbaren seitlichen flexiblen Stangen besteht.

3. Schutzvorrichtung (1) nach einem der vorstehenden Ansprüche, **dadurch gekennzeichnet, dass** die Seitenränder der Schutzwand (2) an der Verstärkung (3) befestigt sind.

4. Schutzvorrichtung (1) nach dem vorstehenden Anspruch, **dadurch gekennzeichnet, dass** die Verstärkung (3) die flexible Wand (2) über ihren gesamten Umfang umschließt.

5. Schutzvorrichtung (1) nach Anspruch 1, bei der die Verstärkung (3) aus mindestens einem Spannbügel (31, 33, 35) besteht, **dadurch gekennzeichnet, dass** die Verstärkung (3) eine Vielzahl von untereinander verbundenen Spannbügeln (31, 33, 35) aus vorgespanntem, elastischem, biegsamen Material umfasst, die eine halbstarre Verstärkung bilden, und dass sie seitliche Schürzen (27) aufweist, die die Biegung der Vorrichtung (1) begrenzen, indem sie die Entspannung der Spannbügel (31, 33, 35) einschränken.

6. Schutzvorrichtung (1) nach dem vorstehenden Anspruch, **dadurch gekennzeichnet, dass** einer der Spannbügel (35) einen Rahmen für einen im entfalteten Zustand straff gespannten Abschnitt der flexiblen Wand (2) der Vorrichtung (1) bildet.

7. Vorrichtung nach einem der Ansprüche 5 oder 6, **dadurch gekennzeichnet, dass** einer der Spannbügel (31) einen Rahmen für einen transparenten vorderen Abschnitt (23) der flexiblen Wand (2) bildet, so dass eine transparente Windschutzscheibe entsteht.

8. Vorrichtung nach einem der Ansprüche 5 bis 7, **dadurch gekennzeichnet, dass** die Spannbügel (31, 33, 35) das vordere Ende der Vorrichtung (1) im Bereich der Befestigungsmittel (5) am Lenkmittel (MD) berühren oder umschließen.

9. Schutzvorrichtung (1) nach einem der vorstehenden Ansprüche, **dadurch gekennzeichnet, dass** die flexible Wand (2) einen Querbalken (61) umfasst.

10. Schutzvorrichtung (1) nach einem der vorstehenden Ansprüche, **dadurch gekennzeichnet, dass** die Verstärkung aus Glasfaser besteht.

11. Vorrichtung nach einem der vorstehenden Ansprüche, **dadurch gekennzeichnet, dass** die Befestigungsmittel mindestens eines der folgenden Mittel umfassen: ein elastisches Band, ein Klettband mit textilen Haken und Schlaufen, eine lösbare formschlüssige Befestigung, eine Spannschnalle, Haken, die mit dem Lenkmittel (MD) formschlüssig zusammenwirken. 1

## Claims

1. Personal weather protection device (1) for the protection of a user (U) using a wheeled vehicle (ER), the device (1) comprising a protective wall (2), consisting of a flexible wall (2) which extends from a carrying system to be positioned above the user's head up to the front while fixing means (5) are provided for fixing the front free end of the protective wall to the steering member (MD) of the wheeled vehicle (ER) and comprising a framework (3) consisting of at least one elastically deformable flexible rod (22a, 22b) or at least one tensioning arch (31, 33, 35) in order to fold the device into the non-use position, said device (1) being carried on the user's back by the carrying system (4), **characterised in that** the carrying system (4) is of the type of a back wall, of a backpack, provided with carrying shoulder straps (40a, 40b), and **in that** the flexible wall comprises a rear skirt (25) protecting the lower back and the pelvis of the user (U) ,and forming a cover accommodating the framework (3) and the flexible wall (2) in the folded state.

2. Protection device (1) according to the preceding claim, wherein the framework (3) consist of at least one elastically deformable lateral flexible rod (22a, 22b), **characterised in that** the framework (3) consist of two elastically deformable lateral flexible rods.

3. Protective device (1) according to any one of the preceding claims, **characterised in that** the side edges of the protective wall (2) are fixed to the framework (3).

4. Protective device (1) according to the preceding claim, **characterised in that** the flexible wall (2) is held by the framework (3) over its entire periphery.

5. Protective device (1) according to Claim 1, wherein the framework (3) consists of at least one tensioning arch (31, 33, 35), **characterised in that** the framework (3) comprises a plurality of interleaved tensioning arches (31, 33, 35) made of pre-stressed elastic flexible material forming a semi-rigid framework, and **in that** it comprises lateral skirts (27) that bound the curvature of the device (1) by limiting the relaxation of the tensioning arches (31, 33, 35).

6. Protective device (1) according to the preceding claim, **characterised in that** one of the tensioning arches (35) forms a frame for a stretched portion in the deployed state of the flexible wall (2) of the device (1).

7. Device according to one of claims 5 or 6, **characterised in that** one of the tensioning arches(31) forms a frame for a transparent front portion (23) of the flexible wall (2) so as to form a transparent windshield.

8. Device according to one of claims 5 to 7, **characterised in that** the tensioning arches (31, 33, 35) are tangential or in contact around the front end of the device (1), at the fastening means (5) to the steering means (MD).

9. Protective device (1) according to any one of the preceding claims, **characterised in that** the flexible wall (2) comprises a cross-member (61).

10. Protective device (1) according to any one of the preceding claims, **characterised in that** the framework is made of fiberglass.

11. Device according to any one of the preceding claims, **characterized in that** the fixing means comprise at least one among: an elastic strap, a self-gripping band with textile loops and hooks, a reversible form-interlocking fastener, a tightening loop, hooks cooperating with the steering means (MD) by form-interlocking.
